# EUROPÄISCHE PATENTSCHRIFT

(11) **EP 1 201 052 B1**
(45) Veröffentlichungstag und Bekanntmachung des Hinweises auf die Patenterteilung: **28.02.2007**
(21) Anmeldenummer: 00952869.6
(22) Anmeldetag: 24.06.2000
(51) Int. Cl.: H04H 1/00, H04H 5/00

(54) **VERFAHREN ZUR AUFBEREITUNG VON QUELLCODIERTEN AUDIODATEN SOWIE SENDER UND EMPFANGER FÜR DIE DURCHFÜHRUNG DIESES VERFAHRENS**
METHOD FOR PREPARING AUDIO DATA IN SOURCE CODE AND TRANSMITTER AND RECEIVER FOR SAME
PROCEDE POUR LA PREPARATION DE DONNEES AUDIO EN CODE SOURCE, AINSI QU'EMETTEUR ET RECEPTEUR POUR CE PROCEDE

(30) Priorität: 12.07.1999 DE 19932062
(43) Veröffentlichungstag der Anmeldung: 02.05.2002
(73) Patentinhaber: ROBERT BOSCH GMBH, 70442 Stuttgart (DE)
(72) Erfinder: HOFMANN, Frank, D-31139 Hildesheim (DE); MLASKO, Torsten, D-30982 Pattensen (DE)
(86) Internationale Anmeldenummer: PCT/DE2000/002059
(87) Internationale Veröffentlichungsnummer: WO 2001/005074

(56) Entgegenhaltungen:
- EP-A- 1 041 756
- EP-A- 1 041 766
- US-A- 5 588 022
- US-A- 5 673 292
- SENGER P: "DRM - DIGITAL RADIO MONDIALE EIN WELTWEITES KONSORTIUM FUER EINEN NEUEN DIGITALEN STANDARD" RUNDFUNKTECHNISCHE MITTEILUNGEN,DE,MENSING. NORDERSTEDT, Bd. 43, Nr. 1, März 1999 (1999-03), Seiten 29-35, XP000824065 ISSN: 0035-9890
- A J VIGIL: "Wireless data transmission through in-band on-channel digital audio broadcasting" PROCEEDINGS OF THE SPIE, 23. Oktober 1995 (1995-10-23), XP002106406

## Beschreibung

### Stand der Technik

Die Erfindung geht aus von einem Verfahren zur senderseitigen oder empfangsseitigen Aufbereitung von quellcodierten Audiodaten mindestens einer Nutzsignalquelle insbesondere für die Übertragung über AM-Kanäle eines vorgegebenen Kanalrasters.

Für die Übertragung digitaler Audiodaten insbesondere über AM-Kanäle eines vorgegebenen Kanalrasters mit 9 bzw. 10 kHz (Mittelwelle in Amerika) breiten Kanälen auf Mittel- und Langwelle sowie Kurzwelle wurden innerhalb des DRM (Digital Radio Mondiale)-Konsortiums drei unterschiedliche Sendesysteme entwickelt. Alle diese Systeme benutzen zur Übertragung einen herkömmlichen AM-Kanal. Beim T2M-Verfahren läßt sich die Digitalinformation per Hilfsträger auf den NF-Eingang des Senders einkoppeln und parallel zum AM-Analogsignal übertragen (Funkschau Heft 14,1998, Seiten 44 bis 46). Das Skywave-2000-Verfahren benutzt ein Mehrträgerverfahren mit TCM (Trellis-Code-Modulation)-Modulation in Verbindung mit QAM (Conference Paper of the 51^{st} Broadcast Engineering Conference, NAB 97, Seiten 27 bis 48, Progress Towards the Developement of Digital Modulation in the Longwave, Mediumwave And Shortwave Bands; IBE, Transmission Engeneering, March 1999, Seiten 53 und 54).

Aus der US 5 588 022 ist es bekannt in einem Standard AM Kanal simultan analoge und digitale Signale zu übertragen. In einem ersten Frequenzspektrum wird ein analoges amplitudenmoduliertes geträgertes Hochfrequenzsignal übertragen. Digital modulierte Trägersignale liegen sowohl im ersten Frequenzspektrum wie auch außerhalb des ersten Frequenzspektrums und umfassen jeweils einen Teil des gesamten Digitalsignals.

Die US 5 673 292 offenbart ein ähnliches Verfahren mit simultaner Übertragung von analogen und digitalen Signalen in einem Standard AM Kanal. Es wird dort ein zusammengesetztes Signal erzeugt mit einem adaptiv modulierten digitalen PSK (phaseshift-keyed) Signal, dem ein analoges Signal aufmoduliert ist.

In Senger P.:"DRM - Digital Radio Mondiale - Ein weltweites Konsortium für einen neuen Digitalen Standard" in Rundfunktechnische Mitteilungen, Band 43, Nr. 1, März 1999, Seiten 29 - 35 werden rein digitale Verfahren vorgeschlagen, die jeweils Standard AM Kanäle nutzen. Ein erstes Verfahren benutzt ein Einträgerverfahren, dessen Träger sowohl amplituden- und phasenmoduliert ist. Ein zweites Verfahren benutzt ein digitales Mehrträgerverfahren. Da diese DRM Signale gleichzeitig neben herkömmlichen AM Signalen übertragen werden, müssen herkömmliche Empfänger über separate Zusatzeinrichtungen wie Digitaldemodulatoren verfügen, um die DRM Signale hörbar zu machen. Diese DRM Signale beeinträchtigen den Nachbarkanalempfang von herkömmlichen AM-Sendungen jedoch sehr stark.

Die Veröffentlichung A J Vigil:"Wireless data transmission through in-band on-channel digital audio broadcasting", Proceedings ofthe SPIE, 23. October 1995, Seiten 105 - 114 zeigt eine FM-DAB-Subkanalmodulation, die wegen ihrer Ähnlichkeit zur Spreizspektrumtechnik nicht über bisher standardisierte Rundfunkkanäle übertragbar ist. Für die Übertragung über Standard AM Rundkanäle wird ein DAB-Modulationssignal aufbereitet mit teilweiser Datenkompression.

Vorteile der Erfindung

Mit den Maßnahmen gemäß den Patentansprüchen ist es möglich, eine Erhöhung einer Wiedergabequalität zu erzielen, zum Beispiel eine bessere Klangqualität, ohne dass vom vorgegebenen Kanalraster abgewichen werden muss, wie dies bei den eingangs genannten Verfahren notwendig ist oder nur mit einer aufwendigen Codierung ohne Qualitätseinbußen erkauft werden kann. Bei der erfindungsgemäßen Lösung mit Kopplung eines Haupt- und mindestens eines Zusatzdatenstroms in unterschiedlichen Kanälen des Kanalrasters lässt sich die empfangsseitige Nutzdatenrate erhöhen und damit eine Qualitätsverbesserung gegenüber herkömmlichen Verfahren erzielen. Mit dem Verfahren nach der Erfindung ist es möglich, mit einfacheren Empfängern nur den Hauptdatenstrom zu demodulieren und zu decodieren, was zur einer verständlichen Wiedergabe mit niedriger Bitrate von ca. 24 Kilobit/s führt. Empfänger mit hoher Wiedergabequalität demodulieren und decodieren sowohl den Hauptdatenstrom wie auch mindestens einen Zusatzdatenstrom eines Nutzsignals und verknüpfen diese beiden Datenströme so, dass sich eine höhere Wiedergabequalität ergibt.

Bei DVB Signalen erfolgt zwar auch eine Zerlegung in eine Basisschicht und eine Erweiterungsschicht. Jedoch werden diese Schichten im gleichen Kanal übertragen. Ein einfacher Empfänger muss dort im Gegensatz zur Erfindung den gesamten Datenstrom empfangen und kann erst danach eine Aufteilung machen.

Das Verfahren nach der Erfindung lässt zahlreiche Kombinationen zur Erhöhung der Wiedergabequalität zu, zum

Beispiel zur Verringerung der Codierartefakte, Erweiterung der Audiobandbreite oder Erweiterung des räumlichen Höreindrucks, zum Beispiel Übergang von Mono auf Stereo.

### Zeichnungen

Anhand der Zeichnungen werden Ausführungsbeispiele der Erfindung näher erläutert. Es zeigen
Figur 1 die sender- und empfangsseitige Aufbereitung der Audiodaten nach der Erfindung,
Figur 2 die Darstellung von AM-Kanälen innerhalb eines vorgegebenen Kanalrasters,
Figur 3 die sende- und empfangsseitige Aufbereitung der Audiodaten nach der Erfindung mit einem Empfänger für hochwertige Wiedergabe,
Figur 4 die Aufbereitung eines Stereosignals,
Figur 5 Kombinationen für die Aufteilung und Zusammenfassung von Audiodaten in einer Basis- und einer Erweiterungsschicht.

### Beschreibung von Ausführungsbeispielen

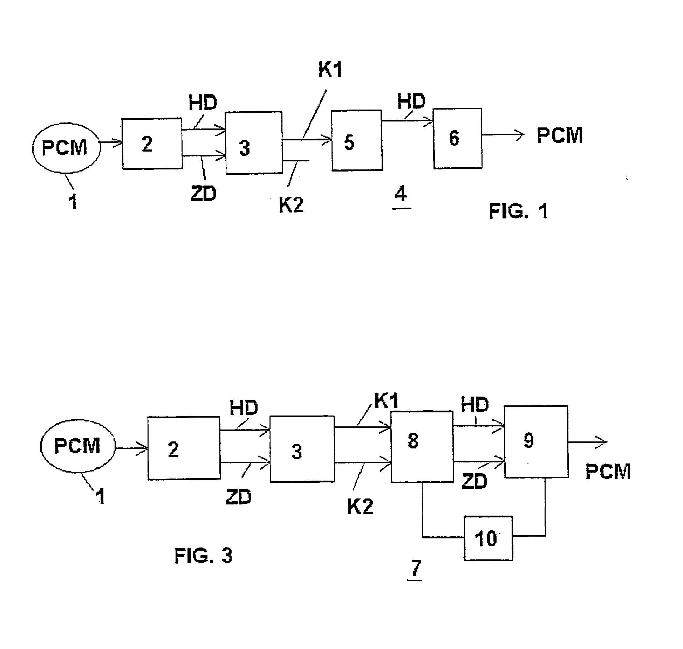

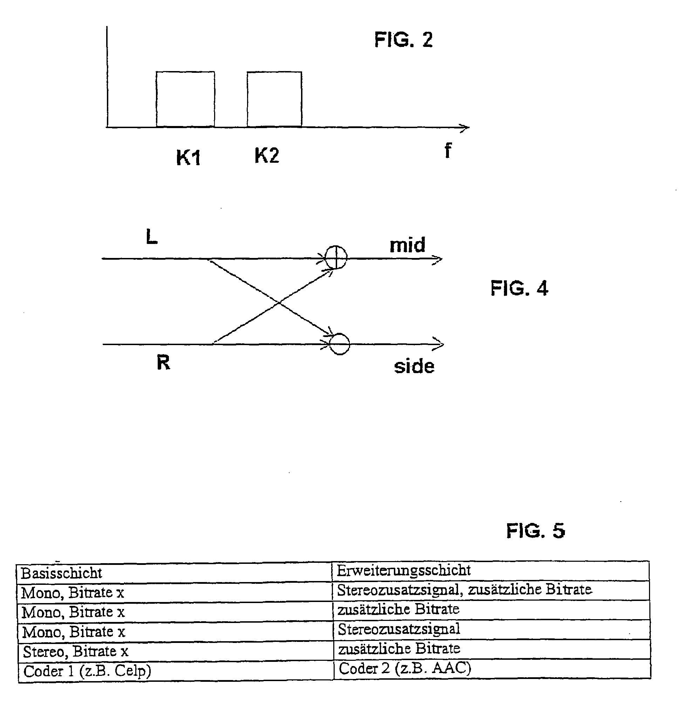

Bei der erfindungsgemäßen Realisierung gemäß Figur 1 werden senderseitig beispielsweise PCM-Daten einer Nutzsignalquelle 1 mittels eines Quellencoders 2 codiert. Hierbei erfolgt eine Auftrennung des encodierten Signals in einen Hauptdatenstrom HD (Basisschicht) und mindestens einen Zusatzdatenstrom ZD (Erweiterungsschicht), d. h. der Quellencoder 2 fungiert in diesem Ausführungsbeispiel gleichzeitig als Auftrenneinrichtung für die Audiodaten der Nutzsignalquelle 1. Haupt- und Zusatzdatenstrom werden mittels der Modulationseinrichtung 3 moduliert und in jeweils unterschiedlichen Kanälen, beispielsweise den in Figur 2 gezeigten benachbarten Kanälen K1 und K2 des vorgegebenen Kanalrasters, zum Beispiel des AM-Mittelkanalrasters mit 9 kHz Abstand, untergebracht. Für die Überführung des Haupt- und Zusatzdatenstroms in die unterschiedlichen Kanäle K1 und K2 werden der Modulationseinrichtung 3 die jeweiligen Trägersignale für diese Kanäle zugeführt. Natürlich müssen diese Kanäle nicht, wie in Figur 2 dargestellt, benachbart sein, sondern können an beliebigen Stellen des vorgegebenen Kanalrasters untergebracht sein. Als Kanäle für die Zusatzdaten ZD können beispielsweise frei werdende Kanäle mit paralleler Programmaustrahlung infolge der höheren Reichweite bei digitaler Modulation verwendet werden oder Kanäle, die durch Bandausweitung infolge nicht mehr benötigter Kanäle anderer Dienste (Küstenfunk, Seefunk, Flugfunk) geschaffen wurden bzw. noch werden, zum Beispiel Ausweitung des AM-Mittelwellenbereichs in USA zwischen 1600 und 1660 kHz oder des Kurzwellenbereichs im 31, 25 und 19-Meter-Band.

Die über getrennte Kanäle gesendeten Datenströme werden empfangsseitig demoduliert und decodiert. Im Ausführungsbeispiel gemäß Figur 1 ist ein Basisempfänger 4 vorgesehen, d. h. ein Empfänger mit niedriger Wiedergabequalität, der nur den Hauptdatenstrom HD mittels des Modulators 5 und Quelldecoders 6 demoduliert und decodiert. Dies ist deshalb möglich, weil im Hauptdatenstrom erfindungsgemäß zumindest soviel Information einer Nutzsignalquelle untergebracht wird wie zu einer verständlichen Wiedergabe der Nutzsignalquelle notwendig ist. Beispielsweise wird im Hauptdatenstrom HD gerade soviel Information der Nutzsignalquelle untergebracht, daß sich die Wiedergabequalität nicht von der bisherigen Wiedergabequalität in den AM-Kanälen auf Mittelwelle, Langwelle und Kurzwelle unterscheidet, d. h. akzeptable Sprachverständlichkeit aber Qualitätseinbußen bei Musikübertragungen.

Beim Ausführungsbeispiel gemäß Figur 3 erfolgt senderseitig die gleiche Signalaufbereitung wie beim Ausführungsbeispiel gemäß Figur 1 jedoch ist empfangsseitig ein Empfänger 7 mit hoher Wiedergabequalität beispielsweise CD-Qualität vorgesehen, der sowohl den Hauptdatenstrom HD als auch den zugehörigen Zusatzdatenstrom ZD mittels der Demodulationseinrichtung 8 und der Decodiereinrichtung 9 demoduliert und decodiert. In einer Verknüpfungseinrichtung werden Hauptdatenstrom HD und zugehöriger Zusatzdatenstrom ZD miteinander verknüpft, um eine Qualitätsverbesserung des empfangenen Audiosignals zu erreichen. Im Ausführungsbeispiel nach Figur 3 fungiert die Quelldecodiereinrichtung 9 gleichzeitig als Verknüpfungseinrichtung. Zur richtigen Verknüpfung einander zugehöriger Haupt- und Zusatzdatenströme ist im Hautptdatenstrom HD (Basisschicht) senderseitig eine Signalisierung eingefügt, die angibt, ob und auf welcher Frequenz, d. h. in welchem Kanal ein zur gleichen Nutzsignalquelle (Programmquelle) vorgesehener Zusatzdatenstrom ZD (Erweiterungsschicht) vorhanden ist. Vorzugsweise im Zusatzdatenstrom ist eine Zusatzinformation eingefügt, die angibt, welche Information der Zusatzdatenstrom ZD enthält und gegebenenfalls wie der Hauptdatenstrom HD mit dem zugehörigen mindestens einen Zusatzdatenstrom ZD zusammenzufügen ist. Zur Auswertung der Signalisierung und/oder der Zusatzinformation ist eine Auswerteeinrichtung 10 vorgesehen, die vorzugsweise der Demodulationseinrichtung zugeordnet ist. Diese Auswerteeinrichtung 10 steuert die Verknüpfungseinrichtung bzw. den Quelldecoder 9 entsprechend der ausgewerteten Signale, damit die Verknüpfung zugehöriger Haupt- und Zusatzdatenströme synchron zueinander erfolgt.

In einem Empfänger mit hoher Wiedergabequalität kann wahlweise natürlich auch nur der Hauptdatenstrom HD demoduliert und decodiert werden und damit wie ein Basisempfänger betrieben werden.

Nachfolgend werden Beispiele für die Auftrennung der Audiodaten einer Nutzsignalquelle und mögliche Kombinationen von Hauptdatenstrom (Basisschicht) und Zusatzdatenstrom/-strömen (Erweiterungsschicht/en) gegeben. Im Kanal K1 nach Figur 2 kann zum Beispiel das komplette Mono Audio-Signal einer Programmquelle (Nutzsignalquelle) mit niedriger Bitrate im Hauptdatenstrom enthalten sein, im Kanal K2 ein Zusatzdatenstrom ZD mit allen zusätzlichen benötigten Daten für ein Stereoprogramm mit eventuell höherer Bitrate. Die Aufteilung auf die beiden Datenströme ist prinzipiell mit der Skalierbarkeit von MPEG 4 realisierbar. Empfänger der ersten Generation sowie einfache günstige Empfänger sollen einen Kanal demodulieren und ein monophones Signal decodieren. Empfänger höherer Wiedergabequalität sind vorgesehen beide Kanäle K1 und K2 zu demodulieren und ein stereophones Signal zu decodieren. Dies stellt somit ein sinnvolles Übergangsszenario von der Nutzung eines Kanals zu zwei Kanälen dar. Bei der Einführung von DRM können Empfänger entwickelt werden, die nur die Basisschicht decodieren. Diese Empfänger können auch nach einer späteren Inbetriebnahme des zweiten Kanals mit der Erweiterungsschicht die Basisschicht empfangen. Neben der Stereowiedergabe kann durch Verknüpfung des Hauptdatenstroms mit dem mindestens einen Zusatzdatenstrom eine Qualitätsverbesserung in folgenden Richtungen erfolgen: der Zusatzdatenstrom verringert die Kodierartefakte, der Zusatzdatenstrom erweitert die Audiobandbreite.

Es können natürlich beliebige Kombinationen dieser Qualitätsverbesserungsmaßnahmen, auch unter Hinzunahme der Stereowiedergabe, vorgenommen werden.

Beispiele von Aufteilungen zwischen Basis- und Erweiterungsschicht bei Mono-/Stereocodierung ergeben sich wie folgt:
Um ein Stereosignal zu encodieren, sind im MPEG 4 Standard verschiedene Verfahren vorgesehen. Die nachfolgenden Verfahren 2 und 3 sind hiervon für das erfindungsgemäße Verfahren geeignet:
   1. Codierung des rechten ( R ) und des linken ( L ) Kanals.
   2. MS Stereo Codierung: aus dem originalen Signal wird ein Summensignal (mid) und ein Differenzsignal (side) gebildet bevor es quantisiert wird. Dies ist in Figur 3 dargestellt. Das mid Signal wird in der Basisschicht übertragen, das side Signal in der Erweiterungsschicht.
   3. Intensity Stereo: der rechte und linke Kanal werden nicht getrennt voneinander übertragen. Es wird nur ein Hauptkanal (Basisschicht) sowie ein zugehöriges Richtungssignal (Erweiterungsschicht) übertragen, aus welchen ein Stereosignal gebildet wird.
Beispiele für die Aufteilung und Kombination von Hauptdatenstrom und Zusatzdatenstrom/-strömen zur Erzielung einer variablen Bitrate sind in Figur 5 dargestellt. Im ersten Kanal, zum Beispiel Kanal K1, wird ein encodiertes Signal mit einer Bitrate x übertragen. Im zweiten Kanal, beispielsweise K2, werden alle notwendigen Informationen übertragen, um eine höhere Bitrate zu erreichen. Wie Figur 5 zeigt, ist neben einer zusätzlichen Bitrate in der Erweiterungsschicht auch eine Kombination mit Stereosignalen möglich. Auch ein Beispiel für verschiedene Codertypen CELP-Coder für die Basisschicht und AAC (Advanced Audio Coding)-Coder für die Erweiterungsschicht sind in Figur 5 aufgeführt.
Folgende andere Aufteilungen sind zusätzlich möglich:
   - die Basisschicht enthält zwei Audiodatenströme von verschiedenen Programmquellen. Die Erweiterungsschicht die Datenströme, um die Nutzdaten der Audioprogramme zu erhöhen,
   - zwei oder mehr verschiedene Basisschichten in verschiedenen Kanälen enthalten jeweils einen Audiodatenstrom. In der Erweiterungsschicht eines Kanals sind die zusätzlichen Nutzdaten von zwei oder mehreren Audiodatenströmen enthalten.
Zur digitalen Modulation eignen sich zahlreiche bisher vorgeschlagene Verfahren, zum Beispiel QAM-, MPSK- oder APSK-Verfahren.

## Patentansprüche

1. Verfahren zur sendeseitigen Aufbereitung von quellcodierten Audiodaten mindestens einer Nutzsignalquelle (1), insbesondere für die Übertragung über AM-Kanäle eines vorgegebenen Kanalrasters, **gekennzeichnet durch** folgende Merkmale:
- die quellcodierten Audiodaten mindestens einer Nutzsignalquelle (1) werden aufgetrennt (2) in einen Hauptdatenstrom (HD) und mindestens einen Zusatzdatenstrom (ZD), wobei im Hauptdatenstrom (HD) zumindest soviel Information untergebracht wird, wie zu einer verständlichen Wiedergabe wenigstens einer Nutzsignalquelle (1) notwendig ist, und im Zusatzdatenstrom (ZD) Information zur Qualitätsverbesserung,
- Haupt- und Zusatzdatenstrom (HD, ZD) werden moduliert und in jeweils unterschiedlichen Kanälen (K1, K2) des vorgegebenen Kanalrasters untergebracht.

2. Verfahren zur empfangsseitigen Aufbereitung von Audiodaten, insbesondere für die Übertragung über AM-Kanäle eines vorgegebenen Kanalrasters, **dadurch gekennzeichnet, dass** die Audiodaten in Haupt- und Zusatzdatenströmen (HD, ZD) untergebracht sind, wobei einander zugehörige Haupt- und Zusatzdatenströme (HD, ZD) jeweils aus mindestens einer Nutzsignalquelle (1) stammen und die einander zugehörigen Haupt- und Zusatzdatenströme in jeweils unterschiedlichen Kanälen (K1, K2) des vorgegebenen Kanalrasters untergebracht sind, mit folgenden Schritten:
- in einem Empfänger (4) mit niedriger Wiedergabequalität wird nur der Hauptdatenstrom (HD) demoduliert und decodiert,
- in einem Empfänger (7) mit hoher Wiedergabequalität wird wahlweise nur der Hauptdatenstrom (HD) demoduliert und decodiert, oder es wird der Hauptdatenstrom (HD) und mindestens ein zugehöriger Zusatzdatenstrom (ZD) demoduliert und decodiert, wobei einander zugehörige demodulierte und decodierte Datenströme derart miteinander verknüpft werden, dass sich eine Erhöhung der Wiedergabequalität für die mindestens eine Nutzdatenquelle (1) ergibt.

3. Verfahren nach Anspruch 1 oder 2, **dadurch gekennzeichnet, dass** im Hauptdatenstrom (HD) senderseitig eine Signalisierung eingefügt wird, die angibt, ob und in welchem Kanal ein zur gleichen Nutzsignalquelle (1) vorgesehener Zusatzdatenstrom (ZD) vorhanden ist.

4. Verfahren nach einem der Ansprüche 1 bis 3, **dadurch gekennzeichnet, dass** insbesondere in einem Zusatzdatenstrom (HD) eine Zusatzinformation eingefügt wird, die angibt, welche Information der Zusatzdatenstrom enthält und gegebenenfalls wie der Hauptdatenstrom (HD) mit dem zugehörigen mindestens einen Zusatzdatenstrom (ZD) empfangsseitig zusammenzufügen ist.

5. Verfahren nach einem der Ansprüche 2 bis 4, **dadurch gekennzeichnet, dass** die Verknüpfung zugehöriger Hauptdaten- und Zusatzdatenströme nach mindestens einem der nachfolgenden Kriterien vorgenommen wird:
- zur Verringerung der Codierartefakte,
- zur Erhöhung der Bandbreite für die Wiedergabe der Audiodaten,
- zur Generierung eines Stereosignals.

6. Verfahren nach einem der Ansprüche 1 bis 5, **dadurch gekennzeichnet, dass** zur Auftrennung der quellcodierten Audiodaten der Nutzsignalquelle (1) in den Haupt- und mindestens einen Zusatzdatenstrom (HD, ZD) die Skalierbarkeit von MPEG 4 Datenströmen herangezogen wird.

7. Sender zur Aufbereitung von quellcodierten Audiodaten mindestens einer Nutzsignalquelle (1) insbesondere für die Übertragung über AM-Kanäle eines vorgegebenen Kanalrasters, **gekennzeichnet durch** folgende Merkmale:
- einer Auftrenneinrichtung (2) für die Audiodaten einer Nutzsignalquelle (1) in einen Hauptdatenstrom (HD) und mindestens einen zugehörigen Zusatzdatenstrom (ZD),
- einer Modulationseinrichtung (3) zur Modulation von Haupt- und Zusatzdatenströmen, wobei dieser Modulationseinrichtung (3) insbesondere Trägersignale derart zuführbar sind, dass einander zugehörige Haupt- und Zusatzdatenströme in jeweils unterschiedliche Kanälen eines vorgegebenen Kanalrasters überführbar sind.

8. Empfänger zur empfangsseitigen Aufbereitung von quellcodierten Audiodaten, insbesondere für die Übertragung über AM-Kanäle eines vorgegebenen Kanalrasters, **dadurch gekennzeichnet, dass** die Audiodaten in Haupt- und Zusatzdatenströmen untergebracht sind, mit folgenden Merkmalen:
- einer Demodulations- (5,8) und Decodiereinrichtung (6,9) für zumindest Hauptdatenströme (HD),
- einer Auswerteeinrichtung (10) für eine Signalisierung und gegebenenfalls Zusatzinformationen, wobei die Signalisierung angibt, in welchem Kanal ein zu einem Hauptdatenstrom (HD) zugehöriger Zusatzdatenstrom (ZD) untergebracht ist und die gegebenenfalls vorgesehenen Zusatzinformationen angeben, welche Informationen der Zusatzdatenstrom (ZD) enthält und wie der Hauptdatenstrom (HD) und der mindestens eine Zusatzdatenstrom (ZD) empfangsseitig zusammenzufügen ist,
- einer Verknüpfungseinrichtung (8) für einander zugehörige Haupt- und Zusatzdatenströme, die von der Auswerteeinrichtung (10) steuerbar ist.

## Claims

1. Method for the transmission-end conditioning of source-encoded audio data from at least one useful signal source (1), particularly for transmission using AM channels with a prescribed channel spacing, **characterized by** the following features:
- the source-encoded audio data from at least one useful signal source (1) are spread (2) into a principal data stream (HD) and at least one additional data stream (ZD), with the principal data stream (HD) accommodating at least as much information as is required for comprehensible reproduction of at least one useful signal source (1), and the additional data stream (ZD) accommodating information for quality improvement,
- the principal and additional data streams (HD, ZD) are modulated and are accommodated in respective different channels (K1, K2) with the prescribed channel spacing.

2. Method for the reception-end conditioning of audio data, particularly for transmission using AM channels with a prescribed channel spacing, **characterized in that** the audio data are accommodated in principal and additional data streams (HD, ZD), with mutually associated principal and additional data streams (HD, ZD) respectively coming from at least one useful signal source (1), and the mutually associated principal and additional data streams being accommodated in respective different channels (K1, K2) with the prescribed channel spacing, having the following steps:
- a receiver (4) with low reproduction quality demodulates and decodes just the principal data stream (HD),
- a receiver (7) with high reproduction quality either demodulates and decodes just the principal data stream (HD), or the principal data stream (HD) and at least one associated additional data stream (ZD) are demodulated and decoded, with mutually associated demodulated and decoded data streams being logically combined with one another such that the result is an increase in the reproduction quality for the at least one useful data source (1).

3. Method according to Claim 1 or 2, **characterized in that** signalling is inserted in the principal data stream (HD) at the transmitter end, said signalling indicating whether and in which channel there is an additional data stream (ZD) provided for the same useful signal source (1).

4. Method according to one of Claims 1 to 3, **characterized in that** additional information is inserted particularly in an additional data stream (ZD), said additional information indicating what information the additional data stream contains and, if appropriate, how the principal data stream (HD) needs to be combined with the associated at least one additional data stream (ZD) at the reception end.

5. Method according to one of Claims 2 to 4, **characterized in that** associated principal data and additional data streams are logically combined on the basis of at least one of the following criteria:
- to reduce the encoding artefacts,
- to increase the bandwidth for reproduction of the audio data,
- to generate a stereo signal.

6. Method according to one of Claims 1 to 5, **characterized in that** the scalability of MPEG4 data streams is used to split the source-encoded audio data from the useful signal source (1) into the principal and at least one additional data streams (HD, ZD).

7. Transmitter for conditioning source-encoded audio data from at least one useful signal source (1), particularly for transmission using AM channels with a prescribed channel spacing, **characterized by** the following features:
- a splitting device (2) for splitting the audio data from a useful signal source (1) into a principal data stream (HD) and at least one associated additional data stream (ZD),
- a modulation device (3) for modulating the principal and additional data streams, with this modulation device (3) being able to be supplied with carrier signals, in particular, such that mutually associated principal and additional data streams can be conveyed to respectively different channels with a prescribed channel spacing.

8. Receiver for the reception-end conditioning of source-encoded audio data, particularly for transmission using AM channels with a prescribed channel spacing, **characterized in that** the audio data are accommodated in principal and additional data streams, having the following features:
- a demodulation (5, 8) and decoding device (6, 9) for at least principal data streams (HD),
- an evaluation device (10) for signalling and, if appropriate, additional information, with the signalling indicating which channel accommodates an additional data stream (ZD) associated with a principal data stream (HD), and the possibly provided additional information indicating which information the additional data stream (ZD) contains and how the principal data stream (HD) and the at least one additional data stream (ZD) can be combined at the reception end,
- a combinational logic device (8) for mutually associated principal and additional data streams which is able to be controlled by the evaluation device (10).

## Revendications

1. Procédé pour la préparation du côté émission de données audio en code source d'au moins une source de signal utile (1), en particulier pour la transmission sur des canaux AM d'un réseau de canaux prédéfini,
**caractérisé en ce que**
- les données audio en code source d'au moins une source de signal utile (1) sont séparées (2) en un flux de données principal (HD) et au moins un flux de données auxiliaire (ZD), le flux de données principal (HD) contenant au moins autant d'informations qu'il en faut pour restituer de manière compréhensible au moins une source de signal utile (1), et le flux de données auxiliaire (ZD) contenant des informations pour améliorer la qualité, et
- les flux de données principal et auxiliaire (HD, ZD) sont modulés et insérés dans des canaux différents (K1, K2) du réseau de canaux prédéfini.

2. Procédé pour la préparation du côté réception de données audio, en particulier pour la transmission sur des canaux AM d'un réseau de canaux prédéfini,
**caractérisé en ce qu'**
on insère les données audio dans des flux de données principal et auxiliaire (HD, ZD), des flux de données principal et auxiliaire (HD, ZD) associés provenant chacun d'au moins une source de signal utile (1) et on insère ces flux de données principal et auxiliaire (HD, ZD) associés dans des canaux différents (K1, K2) du réseau de canaux prédéfini, avec les étapes suivantes :
- dans un récepteur (4) à faible qualité de restitution, seul le flux de données principal (HD) est démodulé et décodé,
- dans un récepteur (7) à haute qualité de restitution, seul le flux de données principal (HD) est démodulé et décodé ou, au choix, le flux de données principal (HD) et au moins un flux de données auxiliaire (ZD) sont démodulés et décodés, les flux de données associés démodulés et décodés étant combinés entre eux de sorte qu'il en résulte une augmentation de la qualité de restitution d'au moins une source de données utiles (1).

3. Procédé selon la revendication 1 ou 2,
**caractérisé en ce que**
dans le flux de données principal (HD) on insère du côté émission une signalisation qui indique si et dans quel canal se trouve un flux de données auxiliaire (ZD) prévu pour la même source de signal utile (1).

4. Procédé selon une des revendications 1 à 3,
**caractérisé en ce qu'**
en particulier dans un flux de données principal (HD) on insère une information supplémentaire qui indique quelle information contient le flux de données auxiliaire et le cas échéant comment le flux de données principal (HD) doit être combiné avec l'au moins un flux de données auxiliaire (ZD) associé.

5. Procédé selon une des revendications 2 à 4,
**caractérisé en ce que**
la combinaison des flux de données principal et auxiliaire associés est réalisée selon au moins un des critères suivants :
- pour réduire les artéfacts de codage,
- pour augmenter la largeur de bande pour la restitution des données audio,
- pour générer un signal stéréo.

6. Procédé selon une des revendications 1 à 5,
**caractérisé en ce que**
pour séparer les données audio en code source de la source de signal utile (1) dans le flux de données principal (HD) et l'au moins un flux de données auxiliaire (ZD), on utilise la plasticité des flux de données MPEG 4.

7. Emetteur pour la préparation de données audio en code source d'au moins une source de signal utile (1), en particulier pour la transmission sur des canaux AM d'un réseau de canaux prédéfini,
**caractérisé par**
- un dispositif de séparation (2) pour les données audio d'une source de signal utile (1) en un flux de données principal (HD) et au moins un flux de données auxiliaire (ZD), et
- un dispositif de modulation (3) pour la modulation des flux de données principal et auxiliaire, ce dispositif de modulation (3) permettant en particulier d'injecter des signaux porteurs, de sorte que des flux de données principal et auxiliaire associés entre eux peuvent être transportés dans des canaux différents d'un réseau de canaux prédéfini.

8. Récepteur pour la préparation du côté réception de données audio en code source, en particulier pour la transmission sur des canaux AM d'un réseau de canaux prédéfini,
**caractérisé en ce que**
les données audio sont insérées dans des flux de données principal et auxiliaire, avec les caractéristiques suivantes :
- un dispositif de démodulation (5, 8) et de décodage (6,9) pour au moins des flux de données principaux (HD),
- un dispositif d'exploitation (10) pour une signalisation et le cas échéant des informations supplémentaires, la signalisation indiquant dans quel canal un flux de données auxiliaire (ZD) associé à un flux de données principal (HD) est inséré, et les informations supplémentaires prévues le cas échéant indiquant quelles informations le flux de données supplémentaire (ZD) contient et comment le flux de données principal (HD) et l'au moins un flux de données auxiliaire (ZD) doivent être combinés du coté réception, et
- un dispositif de combinaison (8) pour des flux de données principal et auxiliaire associés entre eux, qui peut être commandé par le dispositif d'exploitation (10).
